# EUROPEAN PATENT APPLICATION

(11) **EP 4 786 083 A1**
(43) Date of publication of application: **05.08.2026**
(21) Application number: 24871362.0
(22) Date of filing: 17.05.2024
(51) Int. Cl.: B23C 5/20, B23C 5/10

(54) **CUTTING INSERT AND EDGE REPLACEABLE END MILL**

(30) Priority: 29.09.2023 JP 2023169985
(71) Applicant: Mitsubishi Materials Corporation, Tokyo 100-8117 (JP)
(72) Inventor: KITAJIMA, Jun, Tokyo 100-8117 (JP)
(74) Representative: Hoffmann Eitle
(86) International application number: PCT/JP2024/018326
(87) International publication number: WO 2025/069551

(57) **Abstract**

Provided are a cutting insert and an indexable end mill, in which a cutting edge (14) includes: a major cutting edge (17) disposed on a first side among four sides of a quadrangular surface (11); a minor cutting edge (18) disposed on a second side; and a corner cutting edge (19), the minor cutting edge (18) includes: a curved cutting edge portion (18a) connected to the corner cutting edge (19) and having a curved shape that is convex toward a front side; and a linear cutting edge portion (18b) connected to the curved cutting edge portion (18a) and extending linearly toward a rear side as the linear cutting edge portion (18b) progresses in the left-right direction toward a side opposite to the curved cutting edge portion (18a), and the flank face (16) includes: a first minor flank face (16b) connected to the curved cutting edge portion (18a) and having a curved shape that is convex toward the front side; and a second minor flank face (16c) connected to the linear cutting edge portion (18b) and having a planar shape.

## Description

### TECHNICAL FIELD

The present invention relates to a cutting insert and an indexable end mill.

Priority is claimed on Japanese Patent Application No. 2023-169985, filed September 29, 2023, the content of which is incorporated herein by reference.

### BACKGROUND ART

As an indexable end mill in the related art, for example, a cutting tool disclosed in Patent Document 1 is known. The cutting tool of Patent Document 1 includes a cutting insert having a rectangular plate shape and a holder having a cylindrical shape. The holder has a chip discharge flute extending spirally around a tool central axis (rotational axis) and a plurality of insert mounting seats arranged in a stepwise pattern along the chip discharge flute. A plurality of cutting inserts of the same shape are removably mounted on the plurality of insert mounting seats.

The cutting insert has a rake face disposed on a rectangular surface facing an end mill rotation direction, a flank face disposed across a side surface facing a tip side in a tool axial direction along a tool central axis and a side surface facing an outer side in a tool radial direction orthogonal to the tool central axis, and a cutting edge disposed on a ridge portion in which the rake face and the flank face are connected.

The cutting edge includes a major cutting edge extending in a longitudinal direction of the rectangular surface, a minor cutting edge extending in a lateral direction of the rectangular surface, a corner cutting edge having a convex curve shape and connected to the major cutting edge and the minor cutting edge, and an inner cutting edge connected to an end portion of the minor cutting edge on a side opposite to the corner cutting edge in the lateral direction. In the indexable end mill, the major cutting edge functions as a peripheral cutting edge, and the minor cutting edge functions as an end cutting edge. In addition, the inner cutting edge may function as a cutting edge during, for example, a ramping operation.

In addition, the plurality of insert mounting seats arranged in a stepwise pattern along the chip discharge flute include a foremost (first-stage) insert mounting seat disposed on a foremost side in the tool axial direction and an insert mounting seat (second-stage or subsequent insert mounting seat) other than foremost insert mounting seat, which is arranged on a posterior end side of the foremost insert mounting seat in the tool axial direction.

The insert mounting seat other than the foremost insert mounting seat has a first wall surface that contacts a seating face facing a side opposite to the rake face of the cutting insert, a second wall surface that contacts a side surface of the cutting insert facing an inner side in the tool radial direction, and a third wall surface that contacts a side surface of the cutting insert facing a tip side in the tool axial direction. The first wall surface supports the cutting insert from the side opposite to the end mill rotation direction. The second wall surface supports the cutting insert from the inner side in the tool radial direction. The third wall surface supports the cutting insert from the tip side in the tool axial direction.

The foremost insert mounting seat has a first wall surface that contacts a seating face facing a side opposite to the rake face of the cutting insert, a second wall surface that contacts a side surface of the cutting insert facing an inner side in the tool radial direction, and a fourth wall surface that contacts a side surface of the cutting insert facing a posterior end side in the tool axial direction. The first wall surface supports the cutting insert from the side opposite to the end mill rotation direction. The second wall surface supports the cutting insert from the inner side in the tool radial direction. The fourth wall surface supports the cutting insert from the posterior end side in the tool axial direction.

As described above, the insert mounting seat (second-stage or subsequent insert mounting seat) other than foremost insert mounting seat and the foremost (first-stage) insert mounting seat have different wall surfaces (third wall surface and fourth wall surface) that support the cutting insert in the tool axial direction.

### Citation List

### Patent Documents

Patent Document 1: Japanese Patent No. 7052176

### SUMMARY OF INVENTION

### Technical Problem

In this type of indexable end mill, the minor cutting edge (end cutting edge) of the cutting insert mounted on the foremost insert mounting seat performs finish working on a machined surface of a workpiece. By forming the minor cutting edge in a curved shape having a large curvature radius that is convex toward the tip side in the tool axial direction, it is possible to improve the finished surface accuracy.

However, in a case where the minor cutting edge is formed in a convex curve shape, a portion (minor flank face) of the flank face of the cutting insert that is connected to the minor cutting edge is formed in a curved shape that is convex toward the tip side in the tool axial direction. Therefore, in a case where the third wall surface of the insert mounting seat (second-stage or subsequent insert mounting seat) other than foremost insert mounting seat contacts the minor flank face, the contact is point contact or line contact, and it is difficult to stably support the cutting insert by the third wall surface.

On the other hand, the inner cutting edge does not require strict operation accuracy as compared with the minor cutting edge. Therefore, a configuration is considered in which a portion (inner cutting edge flank face) of the flank face that is connected to the inner cutting edge is formed in a planar shape and the third wall surface contacts the inner cutting edge flank face. In this case, the contact between the third wall surface and the inner cutting edge flank face is surface contact, and it is easy to increase a contact area.

However, the inner cutting edge flank face is disposed on the inner side in the tool radial direction as compared with the minor flank face, and accordingly, the third wall surface that supports the inner cutting edge flank face is also disposed at a position far from the major cutting edge or the corner cutting edge in the tool radial direction. Therefore, it is difficult to stably support the cutting insert even with the configuration in which the third wall surface contacts the inner cutting edge flank face.

Further, in the configuration in which the third wall surface contacts the inner cutting edge flank face, in order to prevent a wall portion of the insert mounting seat adjacent to the outer side of the third wall surface in the tool radial direction from coming into contact with the minor flank face of the cutting insert, it is necessary to cut out the wall portion in a recessed shape. Since the chip is likely to enter the cutout (gap) having a recessed shape, the chip is likely to be bitten. In addition, the holder rigidity is reduced by cutting out the wall portion in a recessed shape.

An object of the present invention is to provide a cutting insert and an indexable end mill that can stably support a cutting insert by an insert mounting seat while improving the finished surface accuracy of a minor cutting edge, can suppress biting caused by chip intrusion between the insert mounting seat and the cutting insert, and can increase holder rigidity.

### Solution to Problem

In order to achieve the above object, the present invention provides the following means.

### [Aspect 1 of Present Invention]

A cutting insert including: a rake face disposed on a quadrangular surface facing an insert axial direction in which an insert central axis extends; a flank face disposed across a side surface facing a front-rear direction orthogonal to the insert axial direction and a side surface facing a left-right direction orthogonal to the insert axial direction and the front-rear direction; and a cutting edge disposed on a ridge portion in which the rake face and the flank face are connected, in which the cutting edge includes: a major cutting edge disposed on a first side extending in the front-rear direction among four sides of the quadrangular surface; a minor cutting edge disposed on a second side extending in a direction intersecting the first side among the four sides; and a corner cutting edge disposed on a corner portion between the first side and the second side of the quadrangular surface and connected to the major cutting edge and the minor cutting edge, the minor cutting edge includes: a curved cutting edge portion connected to the corner cutting edge and having a curved shape that is convex toward a front side; and a linear cutting edge portion connected to the curved cutting edge portion and extending linearly toward a rear side as the linear cutting edge portion progresses in the left-right direction toward a side opposite to the curved cutting edge portion, and the flank face includes: a first minor flank face connected to the curved cutting edge portion and having a curved shape that is convex toward the front side; and a second minor flank face connected to the linear cutting edge portion and having a planar shape.

In the cutting insert and the indexable end mill according to the present invention, the minor cutting edge that performs the finish working on the machined surface of the workpiece includes the curved cutting edge portion having a curved shape that is convex toward the tip side in the tool axial direction (front side in the cutting insert). Therefore, it is possible to improve the finished surface accuracy by the curved cutting edge portion. In addition, the minor cutting edge includes the linear cutting edge portion disposed on the inner side of the curved cutting edge portion in the tool radial direction (side opposite to the corner cutting edge of the curved cutting edge portion in the left-right direction in the cutting insert). The linear cutting edge portion extends linearly toward the posterior end side (rear side) in the tool axial direction as the linear cutting edge portion progresses toward a side opposite to the curved cutting edge portion in the tool radial direction (left-right direction).

The flank face includes the first minor flank face connected to the curved cutting edge portion of the minor cutting edge and having a protruded curved shape, and the second minor flank face connected to the linear cutting edge portion of the minor cutting edge and having a planar shape. Therefore, by bringing the third wall surface of the insert mounting seat (second-stage or subsequent insert mounting seat) other than foremost insert mounting seat into contact with the second minor flank face facing the tip side (front side) of the cutting insert in the tool axial direction, the contact is surface contact, and it is easy to increase the contact area.

For example, in the present invention, the third wall surface contacts the second minor flank face (minor flank face) as compared with a configuration in which the third wall surface contacts the inner cutting edge flank face, which is different from the present invention. Therefore, in the present invention, the third wall surface is disposed closer to the major cutting edge or the corner cutting edge in the tool radial direction. That is, the third wall surface contacts the cutting insert on a more outer side in the tool radial direction, which is referred to as "outer contact".

Therefore, according to the present invention, the cutting insert can be stably supported by the third wall surface.

In addition, since the third wall surface is in contact with the minor flank face, it is not necessary to provide a recessed cutout (gap) or the like in order to prevent the third wall surface from coming into contact with the minor flank face. Therefore, the chip does not enter the recessed cutout or the like, and the biting of the chip can be suppressed. In addition, since it is not necessary to provide the recessed cutout or the like, the holder rigidity can be stably secured.

As described above, according to the present invention, it is possible to stably support the cutting insert by the insert mounting seat while improving the finished surface accuracy of the minor cutting edge, to suppress the biting caused by the chip intrusion between the insert mounting seat and the cutting insert, and to increase the holder rigidity.

### [Aspect 2 of Present Invention]

The cutting insert according to Aspect 1, in which the curved cutting edge portion extends toward the rear side as the curved cutting edge portion progresses in the left-right direction toward a side opposite to the corner cutting edge from a connection point between the curved cutting edge portion and the corner cutting edge.

In this case, in a case where the cutting insert is mounted on the foremost (first-stage) insert mounting seat, the entire minor cutting edge extends toward the posterior end side in the tool axial direction (rear side in the cutting insert) as the entire minor cutting edge progresses toward the inner side in the tool radial direction from the connection point with the corner cutting edge (progresses away from the corner cutting edge in the left-right direction in the cutting insert). That is, the entire minor cutting edge is referred to as a "positive dish" and is inclined with respect to a virtual plane perpendicular to the tool central axis.

As a result, it is possible to reduce the contact area between the minor cutting edge and the machined surface (corresponding to the virtual plane) of the workpiece, to suppress so-called full contact, and to suppress the cutting resistance. It is possible to improve the cutting efficiency or extend the tool life while maintaining the finished surface accuracy.

### [Aspect 3 of Present Invention]

The cutting insert according to Aspect 1 or 2, in which a minor cutting edge clearance angle formed between a virtual straight-line extending along the left-right direction and the linear cutting edge portion in a case where viewed in the insert axial direction is 0.2° or more and 5.0° or less.

In a case where the minor cutting edge clearance angle is 0.2° or more, the entire minor cutting edge can be stably set as the positive dish. In addition, in a case where the minor cutting edge clearance angle is 5.0° or less, a gap between the linear cutting edge portion and the machined surface of the workpiece is prevented from being excessively large, and the function of the minor cutting edge as a finishing cutting edge is further stabilized.

### [Aspect 4 of Present Invention]

The cutting insert according to any one of Aspects 1 to 3, in which a center of the second minor flank face in the left-right direction is located on a major cutting edge side in the left-right direction with respect to a center of the cutting insert in the left-right direction.

### [Aspect 5 of Present Invention]

The cutting insert according to any one of Aspects 1 to 4, in which an entire second minor flank face is located on a major cutting edge side in the left-right direction with respect to a center of the cutting insert in the left-right direction.

In the above configuration, in a case where the third wall surface of the insert mounting seat (second-stage or subsequent insert mounting seat) other than foremost insert mounting seat is brought into contact with the second minor flank face, the third wall surface is disposed closer to the major cutting edge or the corner cutting edge in the tool radial direction. As a result, the cutting insert can be further stably supported by the third wall surface.

### [Aspect 6 of Present Invention]

An indexable end mill including: the cutting insert according to any one of Aspects 1 to 5; and a holder extending in a tool axial direction along a tool central axis and having a columnar shape, in which the holder includes: a chip discharge flute extending spirally around the tool central axis toward a side opposite to an end mill rotation direction as the chip discharge flute progresses from a tip surface of the holder facing the tool axial direction toward a posterior end side; and a plurality of insert mounting seats disposed in a stepwise pattern along the chip discharge flute, a plurality of the cutting inserts are provided, each of the cutting inserts is removably mounted on each of the insert mounting seats, the plurality of insert mounting seats include: a foremost insert mounting seat disposed on a foremost side in the tool axial direction; and an insert mounting seat other than the foremost insert mounting seat disposed on the posterior end side with respect to the foremost insert mounting seat in the tool axial direction, the insert mounting seat other than the foremost insert mounting seat includes: a first wall surface facing the end mill rotation direction and configured to contact a seating face of the cutting insert facing a side opposite to the rake face in the insert axial direction; a second wall surface facing an outer side in a tool radial direction orthogonal to the tool central axis and configured to contact a side surface of the cutting insert facing the left-right direction; and a third wall surface facing the posterior end side in the tool axial direction and configured to contact a side surface of the cutting insert facing the front-rear direction, and the third wall surface contacts the second minor flank face.

### [Aspect 7 of Present Invention]

The indexable end mill according to Aspect 6, in which the cutting edge includes an inner cutting edge located on the second side and disposed on a side opposite to the corner cutting edge of the minor cutting edge in the left-right direction, the flank face includes an inner cutting edge flank face connected to the inner cutting edge and having a planar shape, the cutting insert has a shape that is 180° rotationally symmetric about the insert central axis, the foremost insert mounting seat includes: the first wall surface; the second wall surface; and a fourth wall surface facing a tip side in the tool axial direction and configured to contact a side surface of the cutting insert facing the front-rear direction, and the fourth wall surface contacts the inner cutting edge flank face.

In the above configuration, by bringing the fourth wall surface of the foremost (first-stage) insert mounting seat into contact with the inner cutting edge flank face facing the posterior end side (rear side) of the cutting insert in the tool axial direction, the contact is surface contact, and it is easy to increase the contact area.

In addition, the inner cutting edge flank face of the cutting insert facing the posterior end side in the tool axial direction is disposed closer to the major cutting edge or the corner cutting edge of an outer peripheral portion of a tip used for cutting in the tool radial direction. That is, the fourth wall surface contacts the cutting insert on a more outer side in the tool radial direction, which is referred to as "outer contact".

Therefore, with the above configuration of the present invention, the cutting insert can be stably supported by the fourth wall surface.

### Advantageous Effects of Invention

According to the above aspects of the present invention, it is possible to provide the cutting insert and the indexable end mill that can stably support the cutting insert by the insert mounting seat while improving the finished surface accuracy of the minor cutting edge, can suppress the biting caused by the chip intrusion between the insert mounting seat and the cutting insert, and can increase the holder rigidity.

### BRIEF DESCRIPTION OF DRAWINGS

[FIG. 1] A perspective view showing a cutting insert according to the present embodiment.
[FIG. 2] A plan view of the cutting insert according to the present embodiment when viewed in an insert axial direction.
[FIG. 3] A side view of the cutting insert according to the present embodiment when viewed in a left-right direction.
[FIG. 4] A front view (rear view) of the cutting insert according to the present embodiment when viewed in a front-rear direction.
[FIG. 5] A perspective view showing a part of a holder according to the present embodiment.
[FIG. 6] A perspective view showing a part of the holder according to the present embodiment.
[FIG. 7] A perspective view showing a part of an indexable end mill according to the present embodiment.
[FIG. 8] A perspective view showing a part of the indexable end mill according to the present embodiment.
[FIG. 9] A side view of the indexable end mill according to the present embodiment when viewed in a tool radial direction.
[FIG. 10] A side view of the indexable end mill according to the present embodiment when viewed in the tool radial direction.
[FIG. 11] A bottom view of the indexable end mill according to the present embodiment when viewed from a tip side in a tool axial direction.
[FIG. 12] A side view showing an enlarged view of a XII portion of FIG. 9.

### DESCRIPTION OF EMBODIMENTS

A cutting insert 1 and an indexable end mill 10 according to one embodiment of the present invention will be described with reference to the accompanying drawings. The indexable end mill 10 according to the present embodiment is, for example, a milling tool (cutting tool) that performs a milling process (tool rotating cutting process) on a workpiece made of metal or the like. In the present embodiment, the cutting insert 1 and the indexable end mill 10 may be simply referred to as a tool or the like.

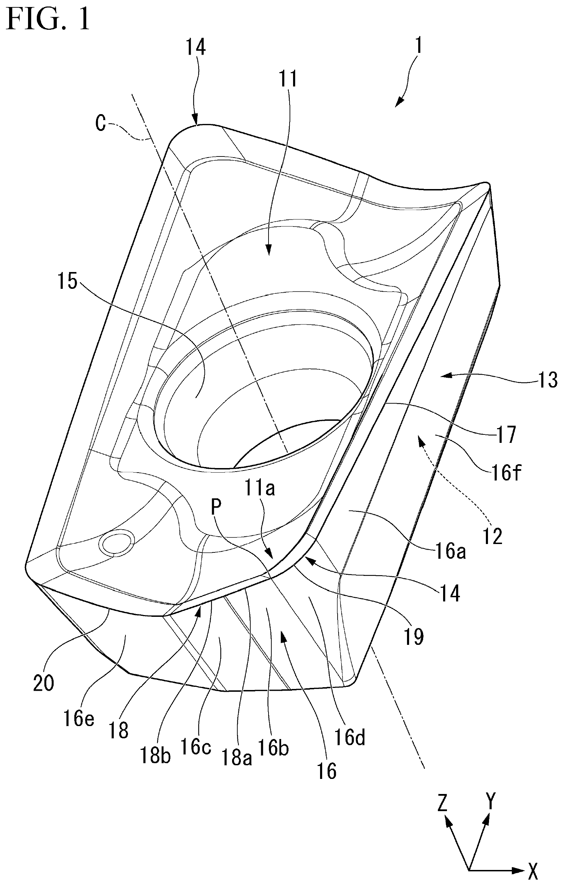

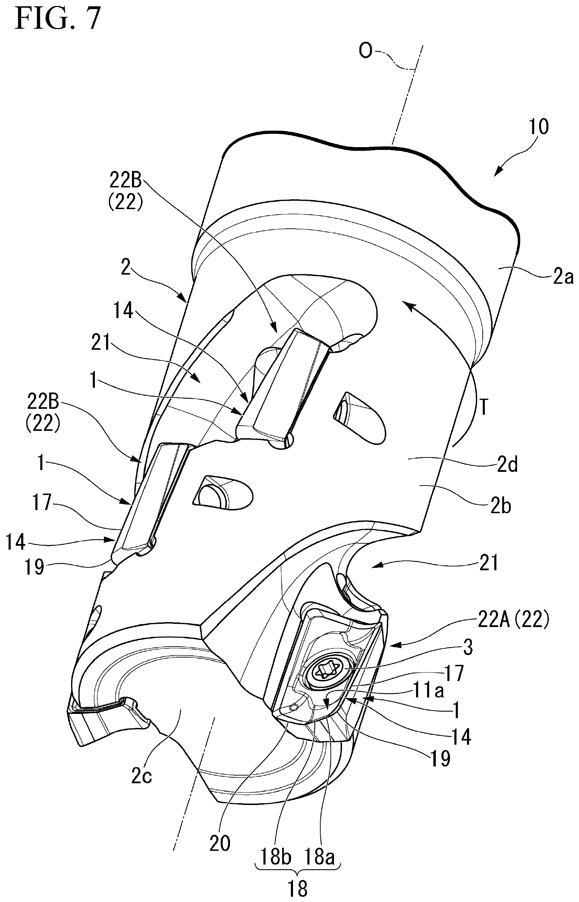

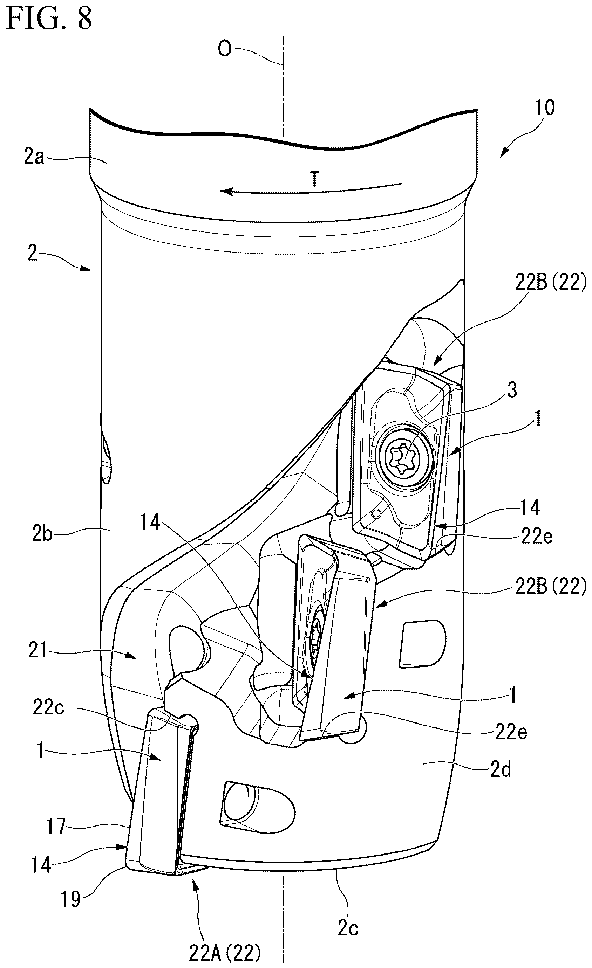

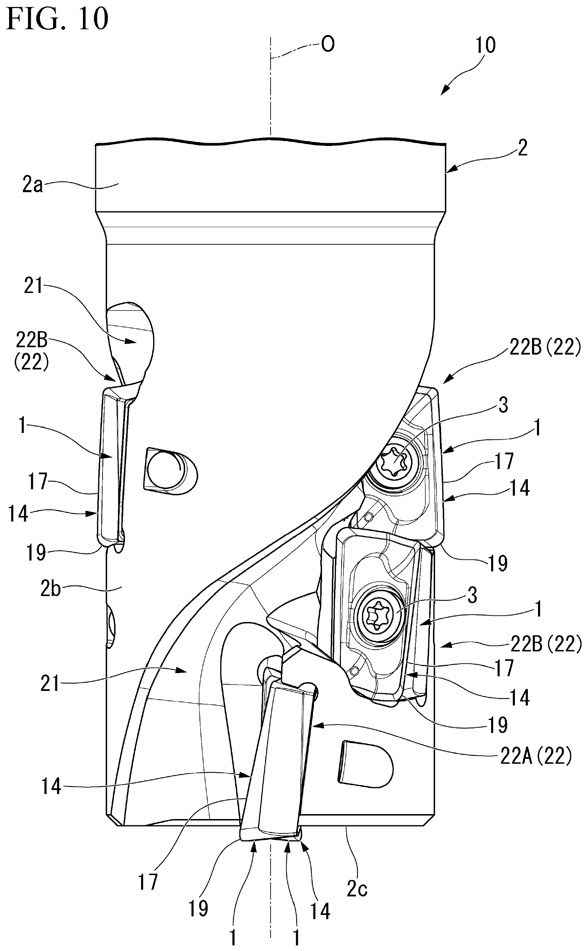

As shown in FIGS. 1 to 4, the cutting insert 1 has a quadrangular plate shape centered on an insert central axis C, and, specifically, has a rectangular plate shape or a parallelogram plate shape. In addition, as shown in FIGS. 7 to 11, the indexable end mill 10 has a substantially cylindrical shape centered on a tool central axis O.

The indexable end mill 10 includes a holder 2, a cutting insert 1 that is removably mounted on the holder 2, and a fastening member 3 that fixes the cutting insert 1 to the holder 2. A plurality of cutting inserts 1 and a plurality of fastening members 3 are provided on the holder 2. The plurality of cutting inserts 1 are common parts having the same shape.

### [Definition of Directions]

In the present embodiment, an XYZ orthogonal coordinate system (three-dimensional orthogonal coordinate system) is set as appropriate in each of FIGS. 1 to 4, and the components of the cutting insert 1 will be described.

In the present embodiment, a direction in which the insert central axis C of the cutting insert 1 extends is referred to as an insert axial direction. In each of FIGS. 1 to 4, the insert axial direction corresponds to a Z-axis direction. The cutting insert 1 has a pair of quadrangular surfaces 11 and 12 facing the insert axial direction. One quadrangular surface 11 of the pair of quadrangular surfaces 11 and 12 faces one side (+Z side) in the insert axial direction, and the other quadrangular surface 12 faces the other side (-Z side) in the insert axial direction. The one quadrangular surface 11 may be referred to as a front surface 11, and the other quadrangular surface 12 may be referred to as a back surface 12. The one side in the insert axial direction may be referred to as a front surface side in the insert axial direction or simply a surface side. The other side in the insert axial direction may be referred to as a back surface side in the insert axial direction or simply a back surface side. In addition, the insert axial direction (Z-axis direction) may be referred to as a thickness direction of the cutting insert 1.

In each drawing, a Y-axis direction is a front-rear direction orthogonal to the insert axial direction (Z-axis direction). In the present embodiment, in the front-rear direction (Y-axis direction), a -Y side is referred to as a front side, and a +Y side is referred to as a rear side.

Further, the X-axis direction is a left-right direction orthogonal to the insert axial direction (Z-axis direction) and the front-rear direction (Y-axis direction). In the present embodiment, in the left-right direction (X-axis direction), a -X side is referred to as a left side, and a +X side is referred to as a right side. In addition, a direction toward the insert central axis C in the left-right direction is referred to as an insert central side or an insert inner side in the left-right direction. In addition, a direction away from the insert central axis C in the left-right direction is referred to as an insert outer side in the left-right direction.

In addition, a direction orthogonal to the insert central axis C is referred to as an insert radial direction. In the insert radial direction, a direction toward the insert central axis C is referred to as an inner side in the insert radial direction, and a direction away from the insert central axis C is referred to as an outer side in the insert radial direction.

In addition, a direction in which rotation is made around the insert central axis C is referred to as an insert circumferential direction.

In FIGS. 7 to 11, a direction in which the tool central axis O extends is referred to as a tool axial direction. The holder 2 has a shank 2a and a body 2b that are arranged in the tool axial direction. In the tool axial direction, a direction from the shank 2a toward the body 2b is referred to as a tip side, and a direction from the body 2b toward the shank 2a is referred to as a posterior end side. Since the body 2b is a portion of the holder 2 on which the cutting insert 1 is mounted, the body 2b may be referred to as a cutting edge portion 2b.

A direction orthogonal to the tool central axis O is referred to as a tool radial direction. In the tool radial direction, a direction toward the tool central axis O is referred to as an inner side in the tool radial direction, and a direction away from the tool central axis O is referred to as an outer side in the tool radial direction.

A direction in which rotation is made around the tool central axis O is referred to as a tool circumferential direction. In the tool circumferential direction, a direction in which the indexable end mill 10 rotates during the cutting process is referred to as an end mill rotation direction T, and a rotation direction opposite to the end mill rotation direction T is referred to as an opposite side of the end mill rotation direction T or a counter end mill rotation direction.

### [Cutting Insert]

The cutting insert 1 is made of, for example, a cemented carbide. As shown in FIGS. 1 to 4, the cutting insert 1 according to the present embodiment has a shape that is 180° rotationally symmetric about the insert central axis C. The cutting insert 1 does not have a front-rear reversal symmetry shape. The cutting insert 1 according to the present embodiment is a so-called single-sided type positive insert.

The cutting insert 1 has a pair of quadrangular surfaces 11 and 12 (front surface 11 and back surface 12) facing the insert axial direction, an outer peripheral surface 13 that faces the outer side in the insert radial direction and extends in the insert circumferential direction, a cutting edge 14, and a through hole 15.

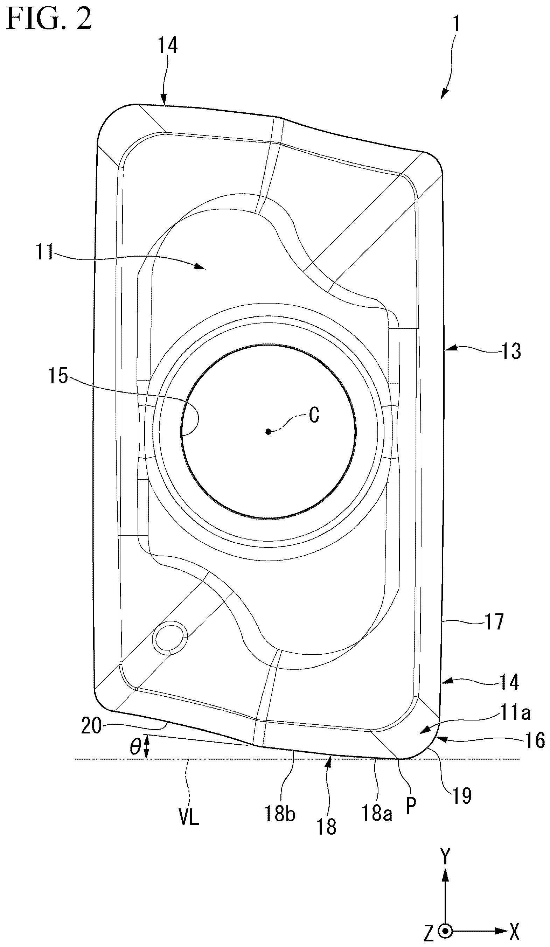

The one quadrangular surface 11 has a quadrangular shape, and has, in the present embodiment, a rectangular shape or a parallelogram shape. As shown in FIG. 2, a longitudinal direction of the one quadrangular surface 11 corresponds to the front-rear direction (Y-axis direction). Further, a lateral direction corresponds to the left-right direction (X-axis direction). Four sides disposed on the outer periphery of the one quadrangular surface 11 include a pair of long sides extending in the front-rear direction and a pair of short sides extending in a direction intersecting the long sides. In the present embodiment, among the four sides of the one quadrangular surface 11, the long side may be referred to as a first side, and the short side may be referred to as a second side. The cutting edge 14 is disposed on the four sides of the one quadrangular surface (front surface) 11.

The one quadrangular surface 11 has a rake face 11a. That is, the cutting insert 1 has the rake face 11a. The rake face 11a is disposed on at least an outer peripheral portion of the quadrangular surface 11. The rake face 11a is disposed along the long side and the short side of the quadrangular surface 11. The rake face 11a extends along the cutting edge 14. The rake face 11a is disposed adjacent to the cutting edge 14 on the inner side in the insert radial direction. The rake face 11a is connected to the cutting edge 14.

The rake face 11a extends toward the other side (back surface side) in the insert axial direction as the rake face 11a progresses from the cutting edge 14 toward the inner side in the insert radial direction. That is, in a case where the X-Y plane is set as a reference surface, a rake angle of the rake face 11a is a positive angle (positive angle).

Although not shown in particular, the other quadrangular surface 12 has a quadrangular shape, and has, in the present embodiment, a rectangular shape or a parallelogram shape. The surface area of the other quadrangular surface (back surface) 12 is smaller than the surface area of the one quadrangular surface (surface) 11.

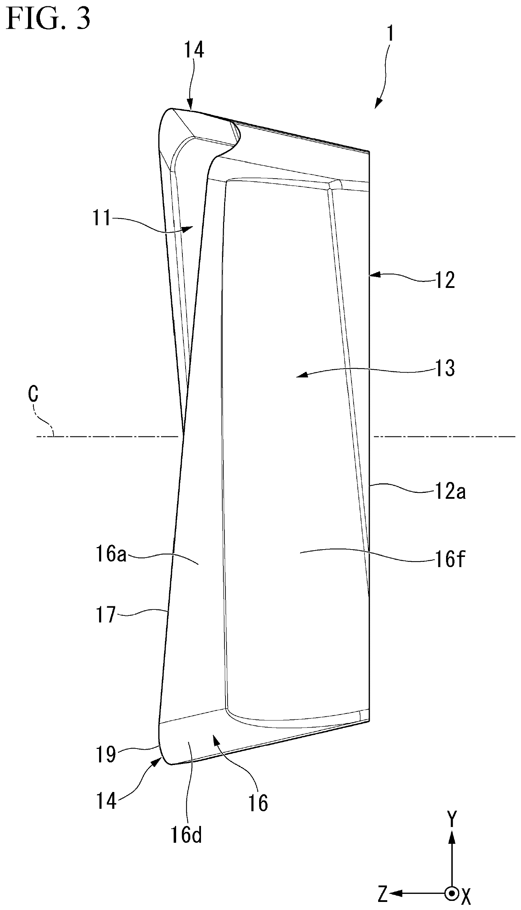

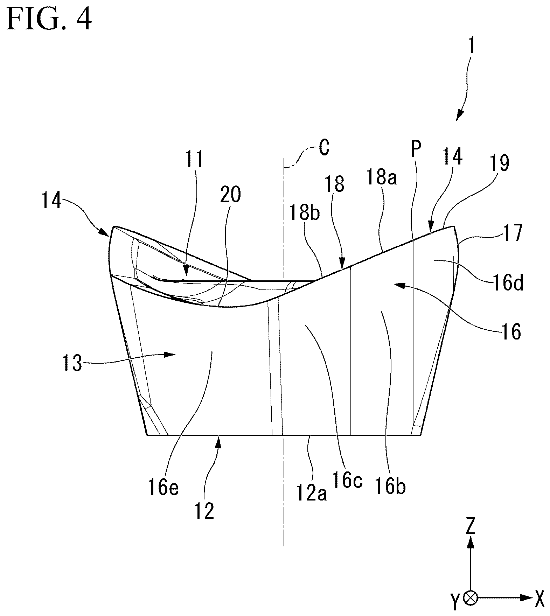

As shown in FIGS. 3 and 4, the other quadrangular surface 12 has a seating face 12a. The seating face 12a has a planar shape perpendicular to the insert central axis C. That is, the seating face 12a is a plane extending parallel to the X-Y plane.

As shown in FIGS. 1 to 4, the outer peripheral surface 13 has an annular shape, and extends around the insert central axis C. The outer peripheral surface 13 has a pair of side surfaces (front side surface and rear side surface) facing the front-rear direction, and a pair of side surfaces (left side surface and right side surface) facing the left-right direction. An end portion of the outer peripheral surface 13 on one side (front surface side) in the insert axial direction is connected to an outer peripheral edge of the one quadrangular surface (front surface) 11. An end portion of the outer peripheral surface 13 on the other side (back surface side) in the insert axial direction is connected to an outer peripheral edge of the other quadrangular surface (back surface) 12.

The outer peripheral surface 13 has a flank face 16. That is, the cutting insert 1 has the flank face 16. The flank face 16 is disposed across a side surface of the outer peripheral surface 13 facing the front-rear direction and a side surface facing the left-right direction. The flank face 16 is disposed on at least one end portion of the outer peripheral surface 13 in the insert axial direction. The flank face 16 is disposed along the long side and the short side of the one quadrangular surface 11. The flank face 16 extends along the cutting edge 14. The flank face 16 is disposed adjacent to the cutting edge 14 on the other side in the insert axial direction. The flank face 16 is connected to the cutting edge 14.

The flank face 16 extends toward the inner side in the insert radial direction as the flank face 16 progresses from the cutting edge 14 toward the other side in the insert axial direction. As a result, it is easy to impart a clearance angle between the machined surface of the workpiece and the flank face 16 during the cutting process, and a degree of freedom of a mounting orientation of the cutting insert 1 on the holder 2 is increased.

Specific components of the flank face 16 will be described later separately.

The cutting edge 14 is disposed on a ridge portion in which the rake face 11a and the flank face 16 are connected. The cutting edge 14 is disposed on the long side and the short side of the one quadrangular surface 11, and has, in the present embodiment, a substantially L-like shape.

A plurality of cutting edges 14 are provided on the cutting insert 1. In the present embodiment, the cutting insert 1 is a single-sided type positive insert having a shape that is 180° rotationally symmetric about the insert central axis C, and the cutting edges 14 are provided at two positions (two sets) that are 180° rotationally symmetric about the insert central axis C. The two cutting edges 14 have a common configuration. Hereinafter, one of the two cutting edges 14 will be described.

The cutting edge 14 includes a major cutting edge 17, a minor cutting edge 18, a corner cutting edge 19, and an inner cutting edge 20.

The major cutting edge 17 is disposed on a first side (long side in the present embodiment) extending in the front-rear direction among the four sides of the one quadrangular surface 11. As shown in FIG. 2, when the cutting insert 1 is viewed in the insert axial direction (Z-axis direction), the major cutting edge 17 has a substantially linear shape extending in the front-rear direction. Specifically, the major cutting edge 17 has a convex curve shape having a large curvature radius (large R) that bulges toward the insert outer side in the left-right direction.

In addition, as shown in FIG. 3, in a side view of the cutting insert 1 when viewed in the left-right direction (X-axis direction), the major cutting edge 17 extends linearly toward one side (+Z side) in the insert axial direction as the major cutting edge 17 progresses toward the front side (-Y side). During the cutting process, the major cutting edge 17 functions as a peripheral cutting edge of the indexable end mill 10.

As shown in FIGS. 1 and 2, the minor cutting edge 18 is disposed on the second side (short side in the present embodiment) of the four sides of the one quadrangular surface 11, the second side extending in a direction intersecting the first side. During the cutting process, the minor cutting edge 18 functions as an end cutting edge of the indexable end mill 10.

The minor cutting edge 18 includes a curved cutting edge portion 18a that is connected to the corner cutting edge 19, and a linear cutting edge portion 18b that is connected to the curved cutting edge portion 18a.

The curved cutting edge portion 18a is connected to an end portion of the corner cutting edge 19 on the insert central side in the left-right direction such that the curved cutting edge portion 18a and the end portion are in contact with each other. In the present embodiment, the expression "connected to be in contact with each other" means that two adjacent cutting edges are smoothly connected to each other such that the two cutting edges have a common tangent at a connection portion (an end portion of the cutting edge and an end portion of the cutting edge).

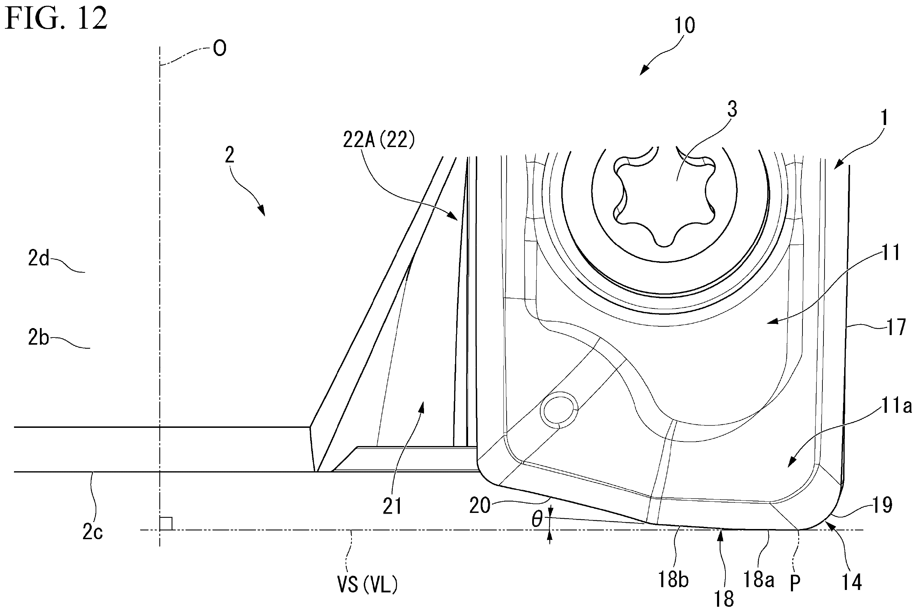

Here, FIG. 12 is a side view showing the vicinity of a tool tip portion of the indexable end mill 10 in which the cutting insert 1 is mounted on the holder 2 when viewed in the tool radial direction. In addition, FIG. 12 is a view showing the vicinity of the cutting edge 14 of the cutting insert 1 mounted on the holder 2 when viewed in the insert axial direction.

As shown in FIGS. 2 and 12, when the cutting insert 1 is viewed in the insert axial direction (Z-axis direction), the curved cutting edge portion 18a has a curved shape that is convex toward the front side (tip side in the tool axial direction). Specifically, the curved cutting edge portion 18a has a convex curve shape having a large curvature radius (large R) that bulges toward the front side.

When viewed in the insert axial direction, the curvature radius of the curved cutting edge portion 18a is, for example, R50 mm or more and R200 mm or less. The curved cutting edge portion 18a may be composed of a single arc having a constant curvature radius, or a combination of a plurality of arcs having different curvature radii.

In the present embodiment, the curved cutting edge portion 18a extends toward the rear side as the curved cutting edge portion 18a progresses from a connection point P between the curved cutting edge portion 18a and the corner cutting edge 19 toward a side opposite to the corner cutting edge 19 in the left-right direction (as the curved cutting edge portion 18a progresses away from the corner cutting edge 19). Specifically, the curved cutting edge portion 18a extends gradually toward the rear side as the curved cutting edge portion 18a progresses from the connection point P located on the foremost side in the curved cutting edge portion 18a toward the left side. Further, a dimension (width dimension) of the curved cutting edge portion 18a in the left-right direction is, for example, 0.2 mm or more and 1.5 mm or less.

In addition, as shown in FIG. 4, when the cutting insert 1 is viewed in the front-rear direction (Y-axis direction), the curved cutting edge portion 18a has a linear shape. The curved cutting edge portion 18a extends toward the other side (-Z side) in the insert axial direction as the curved cutting edge portion 18a progresses toward a side opposite to the corner cutting edge 19 in the left-right direction (X-axis direction).

The linear cutting edge portion 18b is connected to an end portion of the curved cutting edge portion 18a on the insert central side in the left-right direction such that the linear cutting edge portion 18b and the end portion are in contact with each other. As shown in FIGS. 2 and 12, when the cutting insert 1 is viewed in the insert axial direction, the linear cutting edge portion 18b extends linearly toward the rear side (posterior end side in the tool axial direction) as the linear cutting edge portion 18b progresses toward a side opposite to the curved cutting edge portion 18a in the left-right direction (as the linear cutting edge portion 18b progresses away from the curved cutting edge portion 18a). Specifically, the linear cutting edge portion 18b extends gradually toward the rear side as the linear cutting edge portion 18b progresses from the connection point between the curved cutting edge portion 18a and the linear cutting edge portion 18b located on the foremost side in the linear cutting edge portion 18b toward the left side.

As shown in FIG. 2, when viewed in the insert axial direction, a minor cutting edge clearance angle θ formed between a virtual straight-line VL extending along the left-right direction and the linear cutting edge portion 18b may be, for example, 0.2° or more and 5.0° or less, 0.3° or more and 4.5° or less, or 0.5° or more and 4.0° or less. As shown in FIG. 12, in a state where the cutting insert 1 is mounted on the holder 2, when viewed in the insert axial direction, the minor cutting edge clearance angle θ corresponds to an angle formed between a virtual plane VS perpendicular to the tool central axis O and the linear cutting edge portion 18b.

Further, a dimension (width dimension) of the linear cutting edge portion 18b in the left-right direction is, for example, 1.0 mm or more and 3.0 mm or less. The dimension of the linear cutting edge portion 18b in the left-right direction is larger than the dimension of the curved cutting edge portion 18a in the left-right direction. In the present embodiment, each of the dimensions of the curved cutting edge portion 18a and the linear cutting edge portion 18b in the left-right direction may be referred to as an edge length dimension. That is, the edge length dimension of the linear cutting edge portion 18b is larger than the edge length dimension of the curved cutting edge portion 18a.

In addition, as shown in FIG. 4, when the cutting insert 1 is viewed in the front-rear direction, the linear cutting edge portion 18b extends linearly toward the other side (-Z side) in the insert axial direction as the linear cutting edge portion 18b progresses toward a side opposite to the curved cutting edge portion 18a in the left-right direction. In the present embodiment, in an insert front view shown in FIG. 4, the curved cutting edge portion 18a and the linear cutting edge portion 18b are arranged in a straight line to form a single straight line.

As shown in FIGS. 1 to 4, the corner cutting edge 19 is disposed on a corner portion between the first side (long side in the present embodiment) and the second side (short side in the present embodiment) of the one quadrangular surface 11, and is connected to the major cutting edge 17 and the minor cutting edge 18. In the present embodiment, the corner cutting edge 19 has a curved shape that is convex toward the insert outer side in the left-right direction and the front side. As shown in FIG. 12, in a state where the cutting insert 1 is mounted on the holder 2, the corner cutting edge 19 has a curved shape that is convex toward the outer side in the tool radial direction and the tip side in the tool axial direction.

As shown in FIG. 2, one end portion of both end portions of the corner cutting edge 19 is connected to a front end portion of the major cutting edge 17. One end portion of the corner cutting edge 19 is connected to the front end portion of the major cutting edge 17 such that the one end portion and the front end portion are in contact with each other. The other end portion of both end portions of the corner cutting edge 19 is connected to an end portion of the minor cutting edge 18 on the insert outer side (side opposite to the insert central axis C) in the left-right direction. Specifically, the other end portion of the corner cutting edge 19 is connected to an end portion on the right side of the curved cutting edge portion 18a at the connection point P. The other end portion of the corner cutting edge 19 is connected to a right end portion of the curved cutting edge portion 18a (minor cutting edge 18) such that the other end portion and the right end portion are in contact with each other. The corner cutting edge 19 extends toward the insert central side (insert central axis C side) in the left-right direction as the corner cutting edge 19 progresses from one end portion connected to the major cutting edge 17 toward the front side.

As shown in FIGS. 1 to 4, the inner cutting edge 20 is located on the second side (short side in the present embodiment) among the four sides of the one quadrangular surface 11. The inner cutting edge 20 is disposed on a side opposite to the corner cutting edge 19 of the minor cutting edge 18 in the left-right direction. In the present embodiment, the inner cutting edge 20 is disposed adjacent to the minor cutting edge 18 on the left side of the minor cutting edge 18. The inner cutting edge 20 may function as a cutting edge during, for example, a ramping operation. The inner cutting edge 20 need not function as the cutting edge.

As shown in FIG. 2, when the cutting insert 1 is viewed in the insert axial direction, the inner cutting edge 20 extends toward the rear side as the inner cutting edge 20 progresses toward a side opposite to the minor cutting edge 18 in the left-right direction (as the inner cutting edge 20 progresses away from the minor cutting edge 18). As shown in FIG. 12, in a state where the cutting insert 1 is mounted on the holder 2, the inner cutting edge 20 extends toward the posterior end side in the tool axial direction as the inner cutting edge 20 progresses toward the inner side in the tool radial direction.

As shown in FIGS. 2 and 12, when the cutting insert 1 is viewed in the insert axial direction, the inner cutting edge 20 has a curved shape that is concave toward the rear side (posterior end side in the tool axial direction). In addition, as shown in FIG. 4, when the cutting insert 1 is viewed in the front-rear direction, the inner cutting edge 20 has a curved shape that is concave toward the other side (-Z side) in the insert axial direction.

Hereinafter, the components of the flank face 16 will be described.

As shown in FIGS. 1, 3, and 4, the flank face 16 includes a major flank face 16a, a first minor flank face 16b, a second minor flank face 16c, a corner flank face 16d, and an inner cutting edge flank face 16e.

The major flank face 16a is disposed on an end portion of a side surface (right side surface) of the outer peripheral surface 13 of the cutting insert 1 facing the insert outer side in the left-right direction on one side (+Z side) in the insert axial direction. The major flank face 16a is connected to the major cutting edge 17. The major flank face 16a extends in the front-rear direction along the major cutting edge 17. The major flank face 16a has a curved shape that is convex toward the insert outer side in the left-right direction. Specifically, the major flank face 16a has a curved shape that is convex toward the insert outer side in the left-right direction in a cross section perpendicular to the insert central axis C.

The major flank face 16a extends toward the insert central side (left side) in the left-right direction as the major flank face 16a progresses from the major cutting edge 17 toward the other side (-Z side) in the insert axial direction. As a result, it is easy to impart a clearance angle between the machined surface (side wall) of the workpiece and the major flank face 16a during the cutting process.

A supported surface 16f is disposed on a portion of the side surface of the outer peripheral surface 13 of the cutting insert 1 facing the insert outer side in the left-right direction, the portion being located on the other side in the insert axial direction with respect to the major flank face 16a. The supported surface 16f has a planar shape and extends in the front-rear direction.

The first minor flank face 16b and the second minor flank face 16c form a flank face (minor flank face) of the minor cutting edge 18. The first minor flank face 16b and the second minor flank face 16c are disposed on a side surface (front side surface) of the outer peripheral surface 13 of the cutting insert 1 facing the front-rear direction. In the present embodiment, the first minor flank face 16b and the second minor flank face 16c are disposed on the side surface of the outer peripheral surface 13 of the cutting insert 1 facing the front-rear direction over the entire length in the insert axial direction.

The first minor flank face 16b and the second minor flank face 16c extend toward the rear side as the first minor flank face 16b and the second minor flank face 16c progress from the minor cutting edge 18 toward the other side (-Z side) in the insert axial direction. As a result, it is easy to impart a clearance angle between the machined surface (finishing surface) of the workpiece and the minor flank face (first minor flank face 16b and second minor flank face 16c) during the cutting process.

The first minor flank face 16b is connected to the curved cutting edge portion 18a. The first minor flank face 16b has a curved shape that is convex toward the front side. Specifically, the first minor flank face 16b has a curved shape that is convex toward the front side in a cross section perpendicular to the insert central axis C.

The second minor flank face 16c is connected to the linear cutting edge portion 18b. The second minor flank face 16c has a planar shape. The center of the second minor flank face 16c in the left-right direction is located on the major cutting edge 17 side (right side) in the left-right direction with respect to the center of the cutting insert 1 in the left-right direction. In the present embodiment, the entire second minor flank face 16c is located on the major cutting edge 17 side in the left-right direction with respect to the center of the cutting insert 1 in the left-right direction. In other words, the entire minor flank face (first minor flank face 16b and second minor flank face 16c) of the minor cutting edge 18 is disposed on the major cutting edge 17 side with respect to the insert center in the left-right direction.

In addition, in the present embodiment, the dimension of the second minor flank face 16c in the left-right direction is larger than the dimension of the first minor flank face 16b in the left-right direction.

The corner flank face 16d is disposed on a corner portion between the side surface facing the left-right direction and the side surface facing the front-rear direction of the outer peripheral surface 13 of the cutting insert 1. The corner flank face 16d is connected to the corner cutting edge 19. The corner flank face 16d has a curved shape that is convex toward the outer side in the insert radial direction. Specifically, the corner flank face 16d has a curved shape that is convex toward the outer side in the insert radial direction in a cross section perpendicular to the insert central axis C.

The corner flank face 16d extends toward the inner side in the insert radial direction as the corner flank face 16d progresses from the corner cutting edge 19 toward the other side (-Z side) in the insert axial direction. As a result, it is easy to impart a clearance angle between the machined surface of the workpiece and the corner flank face 16d during the cutting process.

As shown in FIGS. 1 and 4, the inner cutting edge flank face 16e is disposed on the side surface of the outer peripheral surface 13 of the cutting insert 1 facing the front-rear direction. The inner cutting edge flank face 16e is connected to the inner cutting edge 20. The inner cutting edge flank face 16e has a planar shape. The inner cutting edge flank face 16e is disposed on the side surface of the outer peripheral surface 13 of the cutting insert 1 facing the front-rear direction over the entire length in the insert axial direction.

The inner cutting edge flank face 16e extends toward the rear side as the inner cutting edge flank face 16e progresses from the inner cutting edge 20 toward the other side (-Z side) in the insert axial direction. As a result, it is easy to impart a clearance angle between the machined surface of the workpiece and the inner cutting edge flank face 16e during the cutting process.

The center of the inner cutting edge flank face 16e in the left-right direction is located on a side opposite to the major cutting edge 17 (left side) in the left-right direction with respect to the center of the cutting insert 1 in the left-right direction. In the present embodiment, the entire inner cutting edge flank face 16e is located on a side opposite to the major cutting edge 17 in the left-right direction with respect to the center of the cutting insert 1 in the left-right direction.

As shown in FIGS. 1 and 2, the through hole 15 penetrates the cutting insert 1 in the insert axial direction. The through hole 15 extends in the insert axial direction in the cutting insert 1 and is open to the pair of quadrangular surfaces 11 and 12. A cross section of the through hole 15 perpendicular to the insert central axis C has a circular shape. A central axis of the through hole 15 is disposed coaxially with the insert central axis C.

### [Holder]

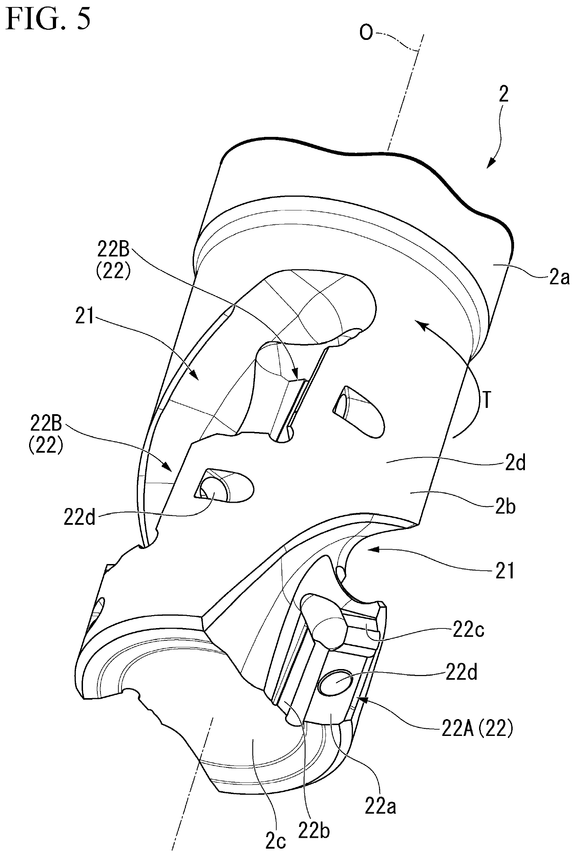

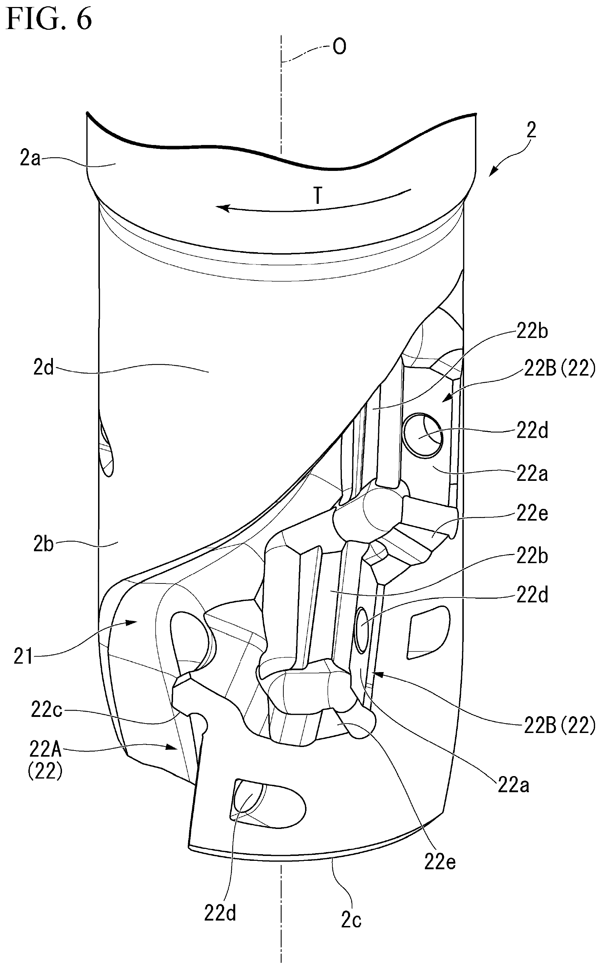

The holder 2 is made of, for example, a metal such as steel. As shown in FIGS. 5 and 6, the holder 2 has a columnar shape extending in the tool axial direction along the tool central axis O. Specifically, the holder 2 has a substantially cylindrical shape centered on the tool central axis O. The holder 2 has the shank 2a and the body 2b disposed on the tip side of the shank 2a in the tool axial direction. The shank 2a and the body 2b are disposed adjacent to each other in the tool axial direction, and are connected to each other. The shank 2a and the body 2b are integrally formed of a single member.

The shank 2a has a cylindrical shape centered on the tool central axis O and extends in the tool axial direction. The shank 2a is removably mounted on a main spindle of a machine tool (not shown). The shank 2a is rotated in the end mill rotation direction T around the tool central axis O by the main spindle of the machine tool. In addition, during the cutting process, the shank 2a is fed in the tool radial direction by the main spindle of the machine tool. In this way, the shank 2a is rotated and fed, so that the cutting edges 14 of the plurality of cutting inserts 1 mounted on the body 2b are cut into the workpiece, and the milling processing is performed.

The body 2b has a substantially cylindrical shape centered on the tool central axis O and extends in the tool axial direction. In the present embodiment, the outer diameter dimension of the body 2b is smaller than the outer diameter dimension of the shank 2a. The body 2b has a chip discharge flute 21 and an insert mounting seat 22. That is, the holder 2 has the chip discharge flute 21 and the insert mounting seat 22.

The chip discharge flute 21 is a trench shape that is open to a tip surface 2c of the body 2b facing the tool axial direction and an outer peripheral surface 2d of the body 2b facing the outer side in the tool radial direction. The chip discharge flute 21 extends spirally around the tool central axis O toward a side opposite to the end mill rotation direction T as the chip discharge flute 21 progresses from the tip surface 2c of the holder 2 facing the tool axial direction toward the posterior end side.

A plurality of chip discharge flutes 21 are provided on the body 2b at a distance from each other in the tool circumferential direction. In the present embodiment, two chip discharge flutes 21 are provided at equal pitches in the tool circumferential direction. The two (plurality of) chip discharge flutes 21 may be disposed at unequal pitches in the tool circumferential direction.

The insert mounting seat 22 is disposed on a wall portion of the chip discharge flute 21 facing the end mill rotation direction T. The plurality of insert mounting seats 22 are provided along a direction in which the spiral of the chip discharge flute 21 extends. The plurality of insert mounting seats 22 are disposed in a stepwise pattern along the chip discharge flute 21. Specifically, two or more insert mounting seats 22 are provided in one chip discharge flute 21, and three insert mounting seats 22 are provided in the present embodiment.

As shown in FIGS. 7 to 11, a plurality of cutting inserts 1 of the same shape are mounted on the plurality of insert mounting seats 22. Each cutting insert 1 is removably mounted on each insert mounting seat 22.

The plurality of insert mounting seats 22 include a foremost (first-stage) insert mounting seat 22A disposed on a most tip side in the tool axial direction, and an insert mounting seat 22B other than foremost insert mounting seat disposed on the posterior end side of the foremost insert mounting seat 22A in the tool axial direction. The foremost (first-stage) insert mounting seat 22A may be referred to as a first-stage insert mounting seat 22A. In addition, the insert mounting seat 22B other than the foremost insert mounting seat may be referred to as a second-stage or subsequent-stage insert mounting seat 22B.

As shown in FIG. 5, the foremost (first-stage) insert mounting seat 22A has a first wall surface 22a facing the end mill rotation direction T, a second wall surface 22b facing the outer side in the tool radial direction, a fourth wall surface 22c facing the tip side in the tool axial direction, and a female thread hole 22d.

The first wall surface 22a contacts the seating face 12a of the cutting insert 1 facing the side opposite to the rake face 11a in the insert axial direction. The first wall surface 22a has a planar shape. The first wall surface 22a supports the cutting insert 1 from a side opposite to the end mill rotation direction T.

The second wall surface 22b contacts the side surface of the cutting insert 1 facing the left-right direction. Specifically, the second wall surface 22b contacts the supported surface 16f of the side surface of the outer peripheral surface 13 of the cutting insert 1 facing the left-right direction. The second wall surface 22b has a planar shape. The second wall surface 22b supports the cutting insert 1 from the inner side in the tool radial direction.

The fourth wall surface 22c contacts the side surface of the cutting insert 1 facing the front-rear direction. Specifically, the fourth wall surface 22c contacts the inner cutting edge flank face 16e of the side surface of the outer peripheral surface 13 of the cutting insert 1 facing the front-rear direction. The fourth wall surface 22c has a planar shape. The fourth wall surface 22c supports the cutting insert 1 from the posterior end side in the tool axial direction.

The female thread hole 22d is open to the first wall surface 22a. The female thread hole 22d is a hole that extends in a direction substantially perpendicular to a direction in which the first wall surface 22a extends. The female thread hole 22d has a female thread portion on an inner peripheral surface thereof.

As shown in FIG. 6, the insert mounting seat (second-stage or subsequent insert mounting seat) 22B other than foremost insert mounting seat has the first wall surface 22a facing the end mill rotation direction T. the second wall surface 22b facing the outer side in the tool radial direction, a third wall surface 22e facing the posterior end side in the tool axial direction, and the female thread hole 22d. The configurations of the first wall surface 22a, the second wall surface 22b, and the female thread hole 22d are the same as those described above, and thus detailed description thereof will be omitted here.

The third wall surface 22e contacts the side surface of the cutting insert 1 facing the front-rear direction. Specifically, the third wall surface 22e contacts the second minor flank face 16c of the side surface of the outer peripheral surface 13 of the cutting insert 1 facing the front-rear direction. The third wall surface 22e has a planar shape. In the present embodiment, the third wall surface 22e extends in the tool radial direction. The dimension of the third wall surface 22e along the tool circumferential direction increases toward the outer side in the tool radial direction. In other words, the width dimension of the third wall surface 22e increases toward the outer side in the tool radial direction. The third wall surface 22e supports the cutting insert 1 from the tip side in the tool axial direction.

### [Fastening Member]

As shown in FIGS. 7 to 11, the fastening member 3 is, for example, a clamp thread. The fastening member 3 removably fixes the cutting insert 1 to the insert mounting seat 22 (22A, 22B) of the holder 2. Specifically, the fastening member 3 is inserted into the through hole 15 of the cutting insert 1, and is threaded into the female thread hole 22d of the insert mounting seat 22.

### [Mounting Orientation of Cutting Insert on Holder]

When the cutting insert 1 is mounted the holder 2, the pair of quadrangular surfaces 11 and 12 (front surface 11 and back surface 12) of the cutting insert 1 face the tool circumferential direction. Specifically, the one quadrangular surface 11 faces the end mill rotation direction T, and the other quadrangular surface 12 faces the counter end mill rotation direction. That is, the cutting insert 1 according to the present embodiment is a so-called side cutting edge type insert. In a case where the cutting insert 1 is mounted on the insert mounting seat 22, the insert central axis C of the cutting insert 1 extends toward the posterior end side in the tool axial direction as the insert central axis C progresses toward the end mill rotation direction T, although not shown in particular.

In addition, in a case where the cutting insert 1 is mounted on the insert mounting seat 22, the cutting edge 14 protrudes to the outer side in the tool radial direction with respect to the outer peripheral surface 2d of the body 2b. The major cutting edge 17 of each cutting insert 1 mounted on the plurality of insert mounting seats 22 extends toward the counter end mill rotation direction as the major cutting edge 17 progresses toward the posterior end side in the tool axial direction. In addition, a rotation locus of the major cutting edge 17 of each cutting insert 1 mounted on the plurality of insert mounting seats 22 around the tool central axis O is located on one virtual cylindrical surface (not shown) centered on the tool central axis O.

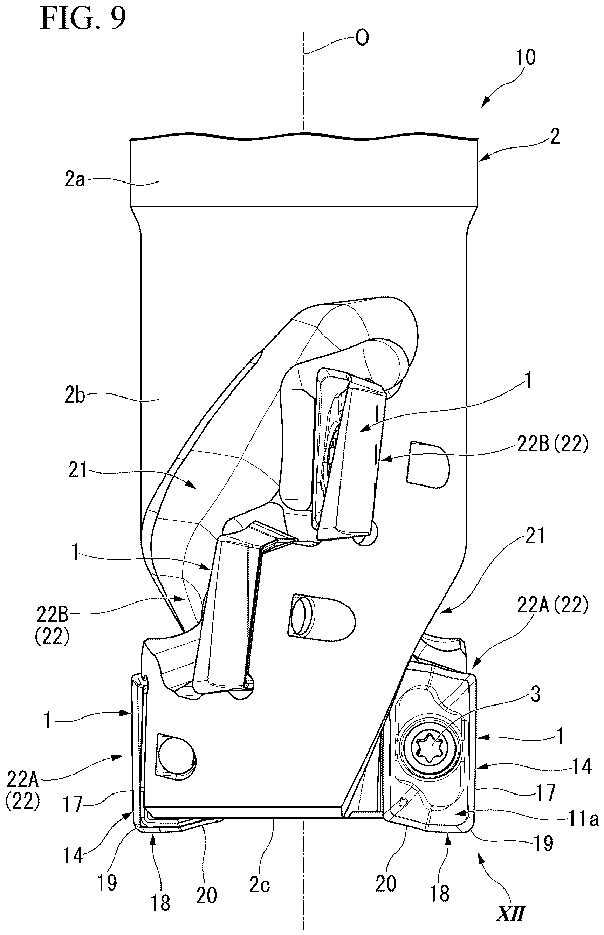

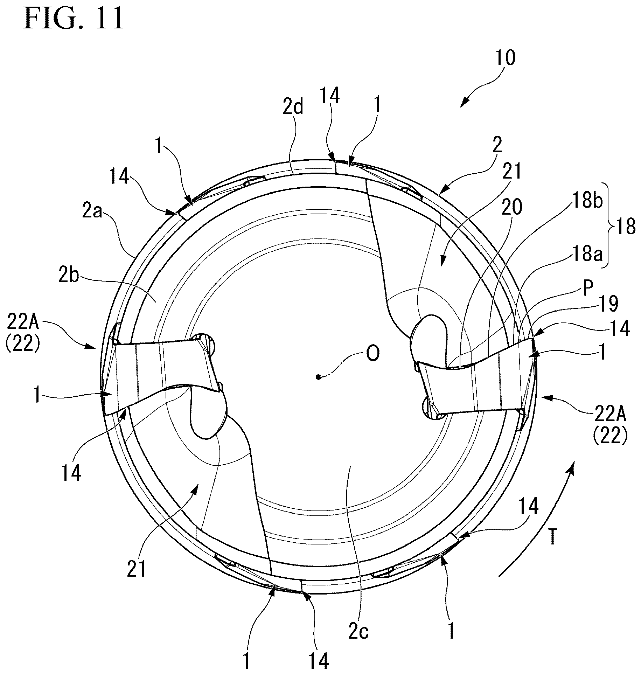

In addition, as shown in FIGS. 9 and 12, the cutting edge 14 of the cutting insert 1 mounted on the foremost (first-stage) insert mounting seat 22A protrudes to the tip side in the tool axial direction with respect to the tip surface 2c of the body 2b. In addition, as shown in FIG. 11, a radial rake angle of the minor cutting edge 18 of the cutting insert 1 mounted on the foremost (first-stage) insert mounting seat 22A is a positive angle (positive angle).

### [Operations and Effects Achieved by Present Embodiment]

In the cutting insert 1 and the indexable end mill 10 according to the present embodiment, the minor cutting edge 18 that performs the finish working on the machined surface of the workpiece includes the curved cutting edge portion 18a having a curved shape that is convex toward the tip side in the tool axial direction (front side in the cutting insert 1). Therefore, it is possible to improve the finished surface accuracy by the curved cutting edge portion 18a. In addition, the minor cutting edge 18 includes the linear cutting edge portion 18b disposed on the inner side of the curved cutting edge portion 18a in the tool radial direction (side opposite to the corner cutting edge 19 of the curved cutting edge portion 18a in the left-right direction in the cutting insert 1). The linear cutting edge portion 18b extends linearly toward the posterior end side (rear side) in the tool axial direction as the linear cutting edge portion progresses toward a side opposite to the curved cutting edge portion 18a in the tool radial direction (left-right direction).

The flank face 16 includes the first minor flank face 16b connected to the curved cutting edge portion 18a of the minor cutting edge 18 and having a protruded curved shape, and the second minor flank face 16c connected to the linear cutting edge portion 18b of the minor cutting edge 18 and having a planar shape. Therefore, by bringing the third wall surface 22e of the insert mounting seat (second-stage or subsequent insert mounting seat) 22B other than foremost insert mounting seat into contact with the second minor flank face 16c facing the tip side (front side) of the cutting insert 1 in the tool axial direction, the contact is surface contact, and it is easy to increase the contact area.

For example, in the present embodiment, the third wall surface 22e contacts the second minor flank face 16c (minor flank face) as compared with a configuration in which the third wall surface 22e contacts the inner cutting edge flank face 16e, which is different from the present embodiment. Therefore, in the present embodiment, the third wall surface 22e is disposed closer to the major cutting edge 17 or the corner cutting edge 19 in the tool radial direction. That is, the third wall surface 22e contacts the cutting insert 1 on a more outer side in the tool radial direction, which is referred to as "outer contact".

Therefore, according to the present embodiment, the cutting insert 1 can be stably supported by the third wall surface 22e.

In addition, since the third wall surface 22e is in contact with the minor flank face, it is not necessary to provide a recessed cutout (gap) or the like in order to prevent the third wall surface 22e from coming into contact with the minor flank face. Therefore, the chip does not enter the recessed cutout or the like, and the biting of the chip can be suppressed. In addition, since it is not necessary to provide the recessed cutout or the like, the holder rigidity can be stably secured.

As described above, according to the present embodiment, it is possible to stably support the cutting insert 1 by the insert mounting seat 22 while improving the finished surface accuracy of the minor cutting edge 18, to suppress the biting caused by the chip intrusion between the insert mounting seat 22 and the cutting insert 1, and to increase the holder rigidity.

In addition, in the present embodiment, the curved cutting edge portion 18a extends toward the rear side as the curved cutting edge portion 18a progresses from a connection point P between the curved cutting edge portion 18a and the corner cutting edge 19 toward a side opposite to the corner cutting edge 19 in the left-right direction.

In this case, as shown in FIG. 12, in a case where the cutting insert 1 is mounted on the foremost (first-stage) insert mounting seat 22A, the entire minor cutting edge 18 extends toward the posterior end side (rear side in the cutting insert 1) as the entire minor cutting edge 18 progresses toward the inner side in the tool radial direction from the connection point P with the corner cutting edge 19 (progresses away from the corner cutting edge 19 in the left-right direction in the cutting insert 1). That is, the entire minor cutting edge 18 is referred to as "positive dish", and is inclined with respect to the virtual plane VS perpendicular to the tool central axis O.

As a result, it is possible to reduce the contact area between the minor cutting edge 18 and the machined surface (corresponding to the virtual plane VS) of the workpiece, to suppress so-called full contact, and to suppress the cutting resistance. It is possible to improve the cutting efficiency or extend the tool life while maintaining the finished surface accuracy.

In addition, in the present embodiment, as shown in FIG. 2, a minor cutting edge clearance angle θ formed between the virtual straight-line VL extending along the left-right direction and the linear cutting edge portion 18b when viewed in the insert axial direction is 0.2° or more and 5.0° or less.

In a case where the minor cutting edge clearance angle θ is 0.2° or more, the entire minor cutting edge 18 can be stably set as the positive dish. In addition, in a case where the minor cutting edge clearance angle θ is 5.0° or less, a gap between the linear cutting edge portion 18b and the machined surface of the workpiece is prevented from being excessively large, and the function of the minor cutting edge 18 as a finishing cutting edge is further stabilized.

In addition, the center of the second minor flank face 16c in the left-right direction is located on the major cutting edge 17 side in the left-right direction with respect to the center of the cutting insert 1 in the left-right direction. In the present embodiment, the entire second minor flank face 16c is located on the major cutting edge 17 side in the left-right direction with respect to the center of the cutting insert 1 in the left-right direction.

In the above configuration, in a case where the third wall surface 22e of the insert mounting seat (second-stage or subsequent insert mounting seat) 22B other than foremost insert mounting seat is brought into contact with the second minor flank face 16c, the third wall surface 22e is disposed closer to the major cutting edge 17 or the corner cutting edge 19 in the tool radial direction. As a result, the cutting insert 1 can be further stably supported by the third wall surface 22e.

In addition, in the present embodiment, the fourth wall surface 22c of the foremost (first-stage) insert mounting seat 22A contacts the inner cutting edge flank face 16e of the cutting insert 1.

In the above configuration, by bringing the fourth wall surface 22c of the foremost (first-stage) insert mounting seat 22A into contact with the inner cutting edge flank face 16e facing the posterior end side (rear side) of the cutting insert 1 in the tool axial direction, the contact is surface contact, and it is easy to increase the contact area.

In addition, the inner cutting edge flank face 16e of the cutting insert 1 facing the posterior end side in the tool axial direction is disposed closer to the major cutting edge 17 or the corner cutting edge 19 of an outer peripheral portion of a tip used for cutting in the tool radial direction. That is, the fourth wall surface 22c contacts the cutting insert 1 on a more outer side in the tool radial direction, which is referred to as "outer contact".

Therefore, according to the above configuration of the present embodiment, the cutting insert 1 can be stably supported by the fourth wall surface 22c.

### [Other Configurations Included in Present Invention]

The present invention is not limited to the above embodiment, and various modifications of the configuration may be made, for example, as described below, without departing from the gist of the invention.

In the above embodiment, the example has been described in which the cutting insert 1 has a rectangular plate shape or a parallelogram plate shape, but the present invention is not limited to this. The cutting insert 1 may have a square plate shape, a rhombic plate shape, and the like centered on the insert central axis C.

The corner cutting edge 19 of the cutting insert 1 may have a linear shape that intersects each of the major cutting edge 17 and the minor cutting edge 18 (curved cutting edge portion 18a) at obtuse angle. That is, the corner cutting edge 19 is not limited to the rounded corner shape described in the above embodiment, and may have a chamfered corner shape.

In the above embodiment, the example has been described in which the entire minor cutting edge 18 is set as the positive dish, but the present invention is not limited to this. For example, the curved cutting edge portion 18a may extend gradually toward the front side as the curved cutting edge portion 18a progresses from the connection point P with the corner cutting edge 19 toward the left side, extend gradually toward the rear side as the curved cutting edge portion 18a progresses from a top portion that protrudes to the foremost side toward the left side.

In addition, although not shown in particular, the holder 2 may have a coolant hole that extends inside the holder 2 and is open toward the vicinity of the cutting edge 14 of each cutting insert 1 disposed on the plurality of insert mounting seats 22.

In addition, in the above embodiment, the end mill rotation direction T in which the tool is rotated is a counterclockwise direction when viewed from the tip side in the tool axial direction as shown in FIG. 11, but the present invention is not limited to this. The end mill rotation direction T may be a clockwise direction when viewed from the tip side in the tool axial direction. That is, the present invention can also be applied to a cutting insert and an indexable end mill having configurations different from those of the above embodiment.

The present invention may include combinations of the respective configurations described in the above embodiment and modified examples, insofar as such combinations do not depart from the gist of the invention, and additions, omissions, substitutions, and other modifications of the configurations may also be made. Furthermore, the present invention is not limited to the above embodiment and the like, but is defined only by the scope of the claims.

### INDUSTRIAL APPLICABILITY

With the cutting insert and the indexable end mill according to the present invention, it is possible to stably support the cutting insert by the insert mounting seat while improving the finished surface accuracy of the minor cutting edge, to suppress the biting caused by the chip intrusion between the insert mounting seat and the cutting insert, and to increase the holder rigidity. Accordingly, the present invention is industrially applicable.

### REFERENCE SIGNS LIST

1 Cutting insert
2 Holder
2c Tip surface
10 Indexable end mill
11 One quadrangular surface (front surface)
11a Rake face
12a Seating face
14 Cutting edge
16 Flank face
16b First minor flank face
16c Second minor flank face
16e Inner cutting edge flank face
17 Major cutting edge
18 Minor cutting edge
18a Curved cutting edge portion
18b Linear cutting edge portion
19 Corner cutting edge
20 Inner cutting edge
21 Chip discharge flute
22 Insert mounting seat
22A Foremost (first-stage) insert mounting seat
22B Insert mounting seat (second-stage or subsequent insert mounting seat) other than foremost insert mounting seat
22a First wall surface
22b Second wall surface
22c Fourth wall surface
22e Third wall surface
C Insert central axis
O Tool central axis
P Connection point
T End mill rotation direction
VL Virtual straight-line
θ Minor cutting edge clearance angle

## Claims

1. A cutting insert comprising:
a rake face disposed on a quadrangular surface facing an insert axial direction in which an insert central axis extends;
a flank face disposed across a side surface facing a front-rear direction orthogonal to the insert axial direction and a side surface facing a left-right direction orthogonal to the insert axial direction and the front-rear direction; and
a cutting edge disposed on a ridge portion in which the rake face and the flank face are connected,
wherein the cutting edge includes:
a major cutting edge disposed on a first side extending in the front-rear direction among four sides of the quadrangular surface;
a minor cutting edge disposed on a second side extending in a direction intersecting the first side among the four sides; and
a corner cutting edge disposed on a corner portion between the first side and the second side of the quadrangular surface and connected to the major cutting edge and the minor cutting edge,
the minor cutting edge includes:
a curved cutting edge portion connected to the corner cutting edge and having a curved shape that is convex toward a front side; and
a linear cutting edge portion connected to the curved cutting edge portion and extending linearly toward a rear side as the linear cutting edge portion progresses in the left-right direction toward a side opposite to the curved cutting edge portion, and
the flank face includes:
a first minor flank face connected to the curved cutting edge portion and having a curved shape that is convex toward the front side; and
a second minor flank face connected to the linear cutting edge portion and having a planar shape.

2. The cutting insert according to Claim 1,
wherein the curved cutting edge portion extends toward the rear side as the curved cutting edge portion progresses in the left-right direction toward a side opposite to the corner cutting edge from a connection point between the curved cutting edge portion and the corner cutting edge.

3. The cutting insert according to Claim 2,
wherein a minor cutting edge clearance angle formed between a virtual straight-line extending along the left-right direction and the linear cutting edge portion in a case where viewed in the insert axial direction is 0.2° or more and 5.0° or less.

4. The cutting insert according to any one of Claims 1 to 3,
wherein a center of the second minor flank face in the left-right direction is located on a major cutting edge side in the left-right direction with respect to a center of the cutting insert in the left-right direction.

5. The cutting insert according to any one of Claims 1 to 3,
wherein an entire second minor flank face is located on a major cutting edge side in the left-right direction with respect to a center of the cutting insert in the left-right direction.

6. An indexable end mill comprising:
the cutting insert according to any one of Claims 1 to 3; and
a holder extending in a tool axial direction along a tool central axis and having a columnar shape,
wherein the holder includes:
a chip discharge flute extending spirally around the tool central axis toward a side opposite to an end mill rotation direction as the chip discharge flute progresses from a tip surface of the holder facing the tool axial direction toward a posterior end side; and
a plurality of insert mounting seats disposed in a stepwise pattern along the chip discharge flute,
a plurality of the cutting inserts are provided,
each of the cutting inserts is removably mounted on each of the insert mounting seats,
the plurality of insert mounting seats include:
a foremost insert mounting seat disposed on a foremost side in the tool axial direction; and
an insert mounting seat other than the foremost insert mounting seat disposed on the posterior end side with respect to the foremost insert mounting seat in the tool axial direction,
the insert mounting seat other than the foremost insert mounting seat includes:
a first wall surface facing the end mill rotation direction and configured to contact a seating face of the cutting insert facing a side opposite to the rake face in the insert axial direction;
a second wall surface facing an outer side in a tool radial direction orthogonal to the tool central axis and configured to contact a side surface of the cutting insert facing the left-right direction; and
a third wall surface facing the posterior end side in the tool axial direction and configured to contact a side surface of the cutting insert facing the front-rear direction, and
the third wall surface contacts the second minor flank face.

7. The indexable end mill according to Claim 6,
wherein the cutting edge includes an inner cutting edge located on the second side and disposed on a side opposite to the corner cutting edge of the minor cutting edge in the left-right direction,
the flank face includes an inner cutting edge flank face connected to the inner cutting edge and having a planar shape,
the cutting insert has a shape that is 180° rotationally symmetric about the insert central axis,
the foremost insert mounting seat includes:
the first wall surface;
the second wall surface; and
a fourth wall surface facing a tip side in the tool axial direction and configured to contact a side surface of the cutting insert facing the front-rear direction, and
the fourth wall surface contacts the inner cutting edge flank face.
